Europäisches Patentamt

European Patent Office

Office européen des brevets

(11) Publication number: **0 035 809**
**A1**

## (12) EUROPEAN PATENT APPLICATION

(21) Application number: **81200199.8**

(22) Date of filing: **20.02.81**

(51) Int. Cl.³: **G 01 G 19/18**
**B 66 C 23/90**

(30) Priority: **07.03.80 GB 8007854**

(43) Date of publication of application:
**16.09.81 Bulletin 81/37**

(84) Designated Contracting States:
**DE FR GB NL**

(71) Applicant: **PHILIPS ELECTRONIC AND ASSOCIATED
INDUSTRIES LIMITED
ARUNDEL GREAT COURT 8 Arundel Street
London WC2R 3DT(GB)**

(84) Designated Contracting States:
**GB**

(71) Applicant: **N.V. Philips' Gloeilampenfabrieken
Pieter Zeemanstraat 6
NL-5621 CT Eindhoven(NL)**

(84) Designated Contracting States:
**DE FR NL**

(72) Inventor: **Ewers, Michael John c/o Ekco Instruments
Ltd.
Prittlebrook Industrial Estate
Southend-on-Sea Essex SS2 6PS(GB)**

(72) Inventor: **Hubbard, Robert William c/o Ekco
Instruments Ltd.
Prittlebrook Industrial Estate
Southend-on-Sea Essex SS2 6PS(GB)**

(74) Representative: **Boxall, Robin John et al,
Philips Electronic and Associated Ind. Ltd. Patent
Department Mullard House Torrington Place
London WC1E 7HD(GB)**

(54) **Load indicating arrangement.**

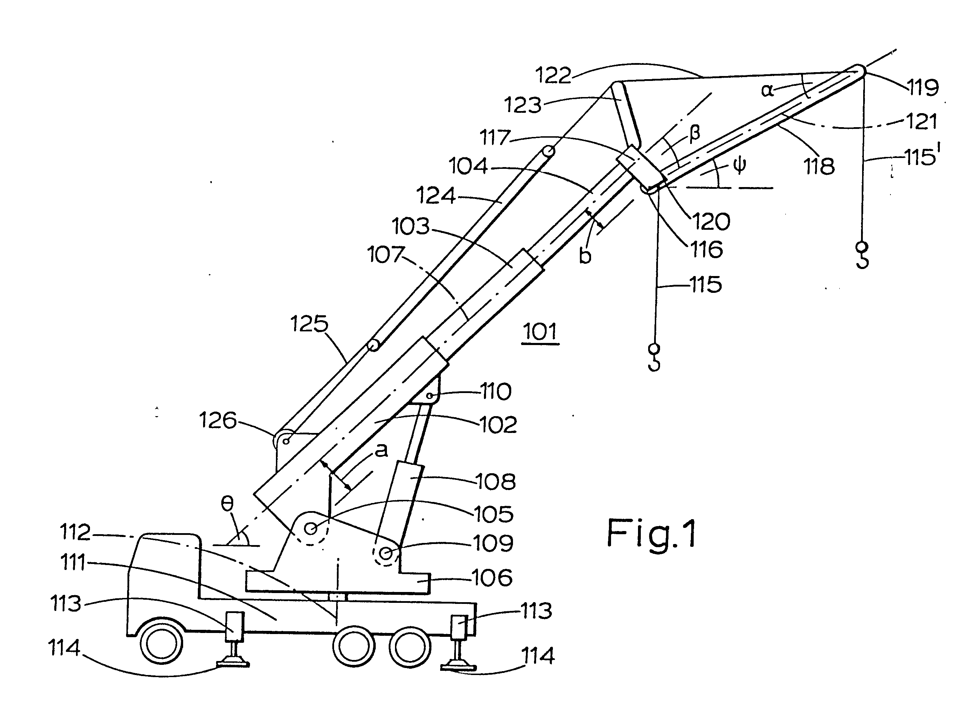

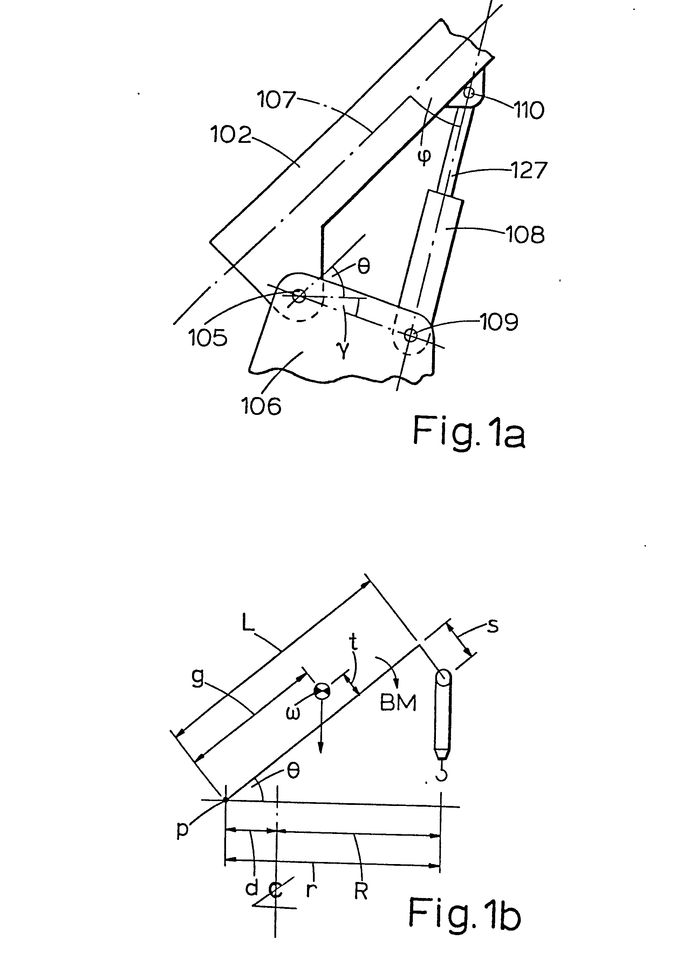

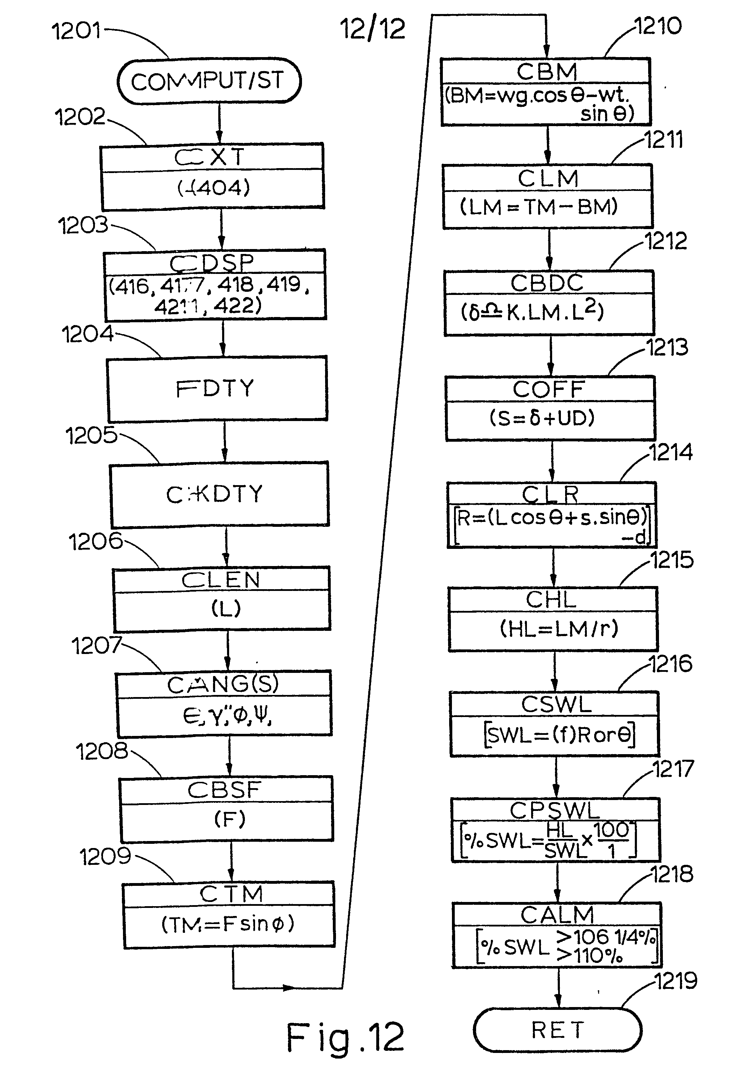

㊼ A safe load indicating arrangement for cranes and other lifting apparatus. The arrangement comprises a micro-computer which is programmed to perform a functional routine for operating the arrangement, and also calibration test, and diagnostic routines for setting-up the arrangement, testing it and fault-finding. Memories in the computer store crane "personality" information, load table information, and a control program comprising the different routines. The functional routine described calculates safe load with respect to actual hook load. Figures 1, 1b and 12 best illustrate the functional routine for a crane.

EP 0 035 809 A1

Croydon Printing Company Ltd.

./...

Fig.1

101

122, 123, 117, 104, 124, 103, 107, 125, 126, 112, 111, 113, 114, α, β, ψ, 118, 119, 121, 115', 120, 116, 115, 110, 102, 108, 105, 109, 106, 113, 114, θ, a, b

Fig.1b

L, g, t, s, ω, θ, BM, p, d, c, r, R

Fig.12

$1201$ COMPUT/ST

$1202$ CXT (404)

$1203$ CDSP (416, 417, 418, 419, 421, 422)

$1204$ FDTY

$1205$ CKDTY

$1206$ CLEN (L)

$1207$ CANG(S) θ, γ, φ, ψ,

$1208$ CBSF (F)

$1209$ CTM (TM = F sin φ)

$1210$ CBM (BM = wg cos θ − wt sin θ)

$1211$ CLM (LM = TM − BM)

$1212$ CBDC (δ = K.LM.L$^2$)

$1213$ COFF (S = δ + UD)

$1214$ CLR [R = (L cos θ + s.sin θ) − d]

$1215$ CHL (HL = LM / r)

$1216$ CSWL [SWL = (f)R or θ]

$1217$ CPSWL [%SWL = $\frac{HL}{SWL} \times \frac{100}{1}$]

$1218$ CALM [%SWL > 106 ¼%, %SWL > 110%]

$1219$ RET

12-XII PP. 2001.

## "LOAD INDICATING ARRANGEMENT"

The present invention relates to a load indicating arrangement for use with cranes, particularly but not exclusively mobile cranes, derricks and other lifting apparatus of a kind having a load-supporting boom pivoted for luffing movement about a horizontal axis: the boom may be slewable about a vertical axis through the whole or part of a circle.

A mobile crane of the above kind may comprise a chassis mounted on wheels or crawler tracks, a superstructure mounted on the chassis for rotational movement about a vertical axis (slewing) and a boom mounted on the superstructure for luffing movement about a horizontal axis. The boom is supported at a desired luff angle by boom support means so arranged that the luff angle can be varied at will.

The boom may be of fixed length, or its length may be variable between lower and upper limits, either continuously or by discrete steps.

A load may be supported by a hoist rope which passes over a pulley or sheave mounted at the outer end of the boom to a hoist winch on the superstructure. A mobile crane can thus reach loads located within a range of distances measured from the crane's slewing centre, the required load radius being attained by suitable choice of boom length and/or luff angle.

To enable the crane to reach light loads located at distances outside its normal range or to lift such loads to greater heights an extension or fly jib may be attached to the outer end of the boom, the hoist rope then passing over a sheave at the outer end of the fly jib.

The chassis may be provided with outriggers or blocking girders which are carried in a stowed position when the crane is in road trim, but which can be extended outwards from the chassis and have their outer ends blocked up from the ground in order to

increase the crane's stability and to relieve the load on the road wheels.

Such a crane has a number of possible operating configurations (hereinafter referred to as modes of operation); for example it may be operated blocked or free on wheels, with or without fly jib, etc. In large and complex mobile cranes, the number of discrete modes may run to several hundreds. Whatever mode of operation is being used, the load must be limited so that the overturning moment to which the crane is subjected does not imperil its stability and also so that no component part of the crane is overstressed.

The overturning moment is the sum of the individual moments produced by the weight of the boom assembly, the weight of the load and any external forces acting on the boom or the load, for example wind forces and forces due to acceleration of the load. Such external forces may be regarded as producing a virtual load which are additive to the actual load. The overturning moment is related to the load radius, and modes in which stability is the primary consideration may be described as radius-related modes.

A crane boom (or a fly jib) may be regarded as a beam anchored at one end supporting a load at the other. The load which such a beam can safely sustain is a function of its angle of inclination to the horizontal. Thus in modes where structural strength is the prime consideration, the maximum safe load is related to the luff angle, and such modes may be described as angle-related modes.

For each mode of operation of the crane the manufacturer provides a rating table which sets out the safe loads corresponding to the maximum and minimum values of the relevant parameter, i.e. load radius or luff angle, according as the mode is radius-related or angle-related, attainable in that mode together with the safe loads corresponding to a number of intermediate values of the parameter. Safe loads corresponding to values of the parameter not listed in the table may be obtained by interpolation

There is known for use with such cranes a load indicating arrangement of a type (hereinafter referred to as being of the type specified) which includes means adapted to produce in respect of each mode of operation of the crane, a reference output which is

0035809

representative of the maximum safe loading for the crane in its prevailing configuration (i.e. the load radius or boom luff angle that currently exists), means for producing a working output which is representative of the actual loading of the crane in the prevailing configuration and means responsive to said reference and working outputs to provide an indication of available lifting capacity of the crane.

Different forms of a load indicating arrangement of the type specified are described in our United Kingdom Patent Specifications Nos. 1,360,128, 1,462,785 and 1,463,811. In these different forms, the working output is derived in different ways, for example as a function of the turning moment of the load about the boom pivot point or as a function of the weight of the load. The reference output is derived from the manufacturer's rating table for the mode in use and corresponds to the same type of quantity as the working output so that a comparison can be made between them to give the indication of available lifting capacity.

In all these forms, however, the working output is derived from an initial measurement of a quantity, for example the reaction sustained by the boom support means, which is a function of the turning moment about the boom pivot point produced by, the weight of the boom assembly in its existing configuration (thus including the fly jib when fitted), the weight of the actual load and any external forces acting on boom or load.

In general, the known forms of load indicating arrangements of the type specified employ analogue signals throughout. Analogue transducers are provided to produce signals representative of the various crane parameters, such as boom extension, luff angle, reaction of boom support means, etc., which can vary when the crane is operated in a given mode. The various transducers are connected to a stabilised reference voltage supply, and at least one preset potentiometer may be associated with each transducer to permit of zeroing and scaling of the transducer output signal.

Crane parameters which remain constant, at least during operation in a given mode, such as minimum boom length, boom weight, fly jib length and weight etc., are represented by analogue signals provided by respective preset potentiometers connected across the reference supply. These latter parameters may be regarded collectively as representing the crane's "personality" and the potentiometers providing the corresponding analogue signals may be referred to as the "personality" potentiometers. While the crane's personality is constant in any one mode, it may vary from mode to mode. Thus a separate set of personality potentiometers may be required for each mode, together with means for selecting the set appropriate to the mode in current use.

The analogue signals from the various transducers together with those from the selected set of personality potentiometers are processed in analogue circuits to produce the working output in analogue form. Conveniently, further analogue output signals representative of e.g. load radius and/or luff angle may be produced. Preset potentiometers may be provided in the various analogue circuits to permit adjustment of circuit parameters such as gain so that the various output signals have a common scale factor.

The means for producing the reference output typically comprises a plurality of analogue circuits, known as law generator units, corresponding in number to the number of discrete modes of operation of the crane, together with means for selecting the law generator unit corresponding to the mode currently in use. Each law generator unit has an input/output characteristic corresponding to the rating table for the relevant mode. The selected law generator unit is provided with an analogue input signal representative of the actual load radius (for radius-related modes) or luff angle (in the case of angle-related modes) and produces an output signal (the reference output) representative of the maximum safe loading of the crane for the mode in current use and the load radius or luff angle currently existing. Many preset potentiometers may be necessary in each law generator unit to permit of its input/output characteristic being adjusted to fit a particular rating table.

The working and reference outputs are applied to an analogue comparator circuit which produces an output signal representative of the available lifting capacity of the crane. Further circuits may provide a first audible and/or visual alarm signal when the actual loading reaches a first predetermined percentage of the maximum

0035809

rated loading and a second alarm signal at a second predetermined percentage.  The second alarm signal may also trigger motion-cut circuits arranged to prevent operation of the crane in a sense such as further to increase the actual loading.

Such analogue-type safe load indicating arrangements are found to have a number of shortcomings, which are aggravated by the increasing size and complexity of the cranes which are now available.

In most countries, safe load indicating arrangements must meet standards of accuracy laid down by Government regulations.  Typical of these are the British regulations which require that an SLI (safe load indicating) system must produce a first,warning,signal when the actual load is between $102\frac{1}{2}\%$ and 110% of safe working load (SWL).  It is also common for a second, motion-cut,signal at, for example, 110% SWL to be provided.  It will be seen that the tolerance is $\pm 3\frac{3}{4}\%$ for the warning signal.

Continuing advances in crane design are producing substantial increase in both the maximum operating radius and the load handling capacity of mobile cranes, and consequently it is becoming increasingly difficult to satisfy the requirements for accuracy of SLI systems for such cranes by purely analogue techniques.  With some modern cranes, when operating near maximum radius, i.e. with large boom extension and small luff angle, the overturning moment due to the weight of the boom alone becomes a very high percentage, typically greater than 95%, of the maximum permissible total moment.  The SLI system is therefore required to determine, to an accuracy not worse than $\pm 3\frac{3}{4}\%$, a quantity which is less than 5% of the total quantity  measured, i.e. the actual turning moment about the boom pivot point.  This places very stringent requirements, not only on the accuracy of the initial measurement but also on the stability, linearity and discrimination of the subsequent analogue signal processing circuits.

A crane boom is not a perfectly rigid structure and will therefore deflect due to its own weight and the weight of any applied load, this deflection producing a change in the load radius as compared with the radius calculated from the boom length and luff angle.  As crane size and maximum boom length increase, the effect of boom deflection becomes relatively more significant.  In analogue SLI systems, or at least those for use with large cranes, circuit means must be provided to correct for boom deflection, thus adding to the complexity of the system and the risk of inaccuracy or failure to detect a dangerous condition of crane loading.

A further difficulty arises from the great number of preset potentiometers which must be set up before an analogue SLI system can function correctly.  While potentiometers representing the 'setpoints' of the crane manufacturer's rating tables can be preset in the factory, zeroing and scaling of transducers and the setting of crane 'personality' potentiometers can only be performed in the field when the SLI system is installed on a particular crane, thus requiring a long, complicated and expensive calibration procedure.

When the system has been initially calibrated and put into service, drift of component values with time may cause loss of accuracy and risk of failure to detect a potentially dangerous condition of the crane.  To minimise this risk, the calibration process is repeated at regular service intervals.  The fact that preset potentiometers must be capable of adjustment in the field introduces the possibility of unauthorised tampering and resultant loss of accuracy or failure to detect dangerous conditions of crane loading.

Especially in the case of SLI systems for use with cranes having a large number of modes of operation, the problem of space and cost in providing accommodation for and access to the corresponding large numbers of set-point and personality potentiometers becomes very great.  To minimise this particular problem,    it is proposed in our United Kingdom Patent Specification No. 1523967 that instead of storing rating table and crane personality data relating to a particular mode in analogue form as settings of a group of preset potentiometers dedicated to that mode and providing similar dedicated groups for each individual mode, the data should be stored in digital form in a location in a  memory unit, for example a Programmable Read Only Memory (PROM) which has a separately addressable location assigned to each  mode of opeartion of the crane.  In operation, the locations corresponding to the mode in current use would be addressed,and the data read out and converted into analogue voltages corresponding to the voltages at the sliders of a group of potentiometers dedicated to that mode. Although this arrangement might mitigate the problem of providing a large number of groups of potentiometers, it would do nothing to reduce other shortcomings of analogue type SLI systems.

It is an object of the present invention to provide a load indicating arrangement of the type specified in which the aforementioned difficulties are substantially overcome.

It is a further object of the invention to provide a safe load indicating arrangement of the type specified including means for detecting and indicating faults.

According to the present invention, a load indicating arrangement for use with a crane or other lifting apparatus of the kind referred to, which arrangement includes means adapted to produce, in respect of each mode of operation of the lifting apparatus for which the arrangement is provided, a reference output which is representative of maximum safe loading of the lifting apparatus in its prevailing configuration, means for providing a working output which is representative of the actual loading of the lifting apparatus in its prevailing configuration and means responsive to said reference and working outputs to provide an indication of available lifting capacity of the lifting apparatus, is characterised in that the said means comprise a digital electronic computer including load table memory means adapted to store, in respect of each mode of operation of the lifting apparatus, a plurality of items of information pertaining to the rated capacity of the lifting apparatus in that mode, personality memory means adapted to store, in respect of each mode of operation of the lifting apparatus, a plurality of items of information pertaining to parameters of the lifting apparatus which are constant in that mode, data acquisition means adapted to receive and temporarily store a plurality of items of information pertaining to parameters of the lifting apparatus which define the particular mode of operation of the lifting apparatus and a plurality of items of information pertaining to parameters of the lifting apparatus whose magnitude can vary during operation in a defined mode, control memory means adapted to store a control program, and central data processing means responsive to said control program, said control program including a routine for determining the current mode of operation of the lifting apparatus, a routine for determining the prevailing configuration of the lifting apparatus, a routine for determining the said reference output, a routine for determining the said working output, a routine for determining available lifting capacity of the lifting apparatus in terms of said reference and working outputs, and a routine for producing output signals indicative of and dependent on the magnitude of said available lifting capacity.

Each of said routines may include a sub-routine for checking relevant data and for setting a respective error flag in the event that data is absent or erroneous. The control program may then further include a routine for producing an output signal effective to prevent operation of the lifting apparatus in the event of an error flag being set.

The control program may further include a test routine enterable on demand, or in the event of an error flag being set, a calibration routine for setting up the arrangement for use in a lifting apparatus, and/or a diagnostic routine for determining faults as signified by set error flags.

In order that the invention and the manner in which it is to be performed may more readily be understood, an embodiment thereof will now be described, by way of example, with reference to the accompanying drawings, of which:-

Figure 1 is a diagrammatic representation of one form of mobile crane;

Figure 1a is a fragmentary portion of Figure 1;

Figure 1b is a theoretical diagram illustrating certain crane parameters;

Figure 2 is a partial diagrammatic representation of another form of mobile crane;

Figure 3 is a partial diagrammatic representation of a further form of mobile crane;

Figure 4 is a block diagram showing inputs to and outputs from the electronic computer of a load indicating arrangement according to the invention;

Figure 5 is a block diagram of the electronic computer;

Figures 6 and 7 show parts of the electronic computer of Figure 5 in greater detail; and

Figures 8 to 13 show flow charts   illustrating the functional operation of the electronic computer.

Typical features of mobile cranes will first be described with reference to Figures 1, 2 and 3.  Referring first to Figure 1, the mobile crane illustrated therein has a boom, indicated generally by the reference numeral 101, which comprises a lower section 102, an intermediate section 103 slidable telescopically within the upper end of the section 102 and an upper section 104 slidable telescopically within the upper end of the section 103.  Extension means (not shown in Figure 1), such as hydraulic rams or chain and sprocket drives, are provided to position the section 103 with respect to the section 102 and to position the section 104 with respect to the section 103, so that the overall length of the boom 101 may be adjusted to any desired value between a minimum and a maximum limit.

The lower end of the boom section 102 is pivoted for luffing movement about a horizontal axis 105 to a crane superstructure 106. The pivot axis 105 may be offset from the longitudinal axis 107 of the boom 101 by a distance $\underline{a}$.

An hydraulic luffing ram 108 has its one end pivoted to the superstructure 106 at a point 109 and its other end pivoted to the boom section 102 at a point 110.  The axis 107 of the boom 101 makes an angle $\theta$ (the luff angle) with the horizontal, $\theta$ being variable by varying the extension of the luffing ram 108.

The superstructure 106 is mounted upon a road vehicle chassis 111, and is arranged for rotation with respect to the chassis about a vertical slewing axis 112.  The chassis 111 is provided with outriggers or blocking girders 113 having extensible ground-engaging feet 114, so arranged that when the chassis is in road trim the outriggers 113 are carried in a stowed position with the feet 114 retracted clear of the ground, but when the crane is to opearate at a fixed location, the outriggers 113 may be drawn outwards from the chassis and blocked up from the ground by downwards extension of the feet 114, so as to increase the stability of the crane and also to relieve the load on the road wheels.

In the basic arrangement of the crane, a load is supported by a hoist rope 115 which passes over a sheave 116 mounted at the head 117 of the boom section 104 to a hoist winch (not shown in Figure 1) mounted on the superstructure 106.  The sheave 116 may be offset from the longitudinal axis 107 of the boom by a distance $\underline{b}$.

To enable the crane to reach light loads located at a greater distance from the slewing centre (axis), or to lift such loads to a greater height than is possible with the basic arrangement, a fly jib 118 may optionally be provided, the hoist rope then passing over a sheave 119 mounted at the outer end of the fly jib 118, as indicated by the reference numeral $115^1$.  The inner end of the fly jib 118 is pivoted at 120 to the boom head 117, and the fly jib 118 is supported with its axis 121 making an angle $\beta$ (the fly jib angle) with the axis 107 of the boom 101 by a fly rope 122 which is secured to the outer end of the fly jib 118 and passes over a strut 123 mounted on the boom head 117 to a tackle 124.  The fall 125 of the tackle 124 is taken to a winch 126 mounted on the boom section 102.  The fly jib angle $\beta$ can thus be varied by hauling in or paying out the fall 125.

In Figure 1, for simplicity, the boom 101 is shown as comprising a lower section 102, an outer section 104 and a single intermediate section 103.  Telescopic booms are not in general restricted to this arrangement, but may have a plurality of intermediate sections, drive means being provided for positioning each successive section with respect to the one below to vary the overall length of the boom between minimum and maximum limits.

In an alternative arrangement one section of the boom,  usually the outermost, is not provided with extension drive means.  It can assume only two positions, either fully retracted or fully extended, and can be moved (manually) from one position to the other when the crane is unladen and the boom lowered for access.  Such an arrangement may be referred to as a telescopic boom with manual extension.  Its overall length can be varied continuously through one or other of two ranges, depending on whether the manual section is retracted or extended.

The boom support means, instead of an hydraulic ram as shown in Figure 1 may comprise a derrick cable secured to the lowermost boom section 102 adjacent its head and thence to a luffing winch mounted on the superstructure 106.

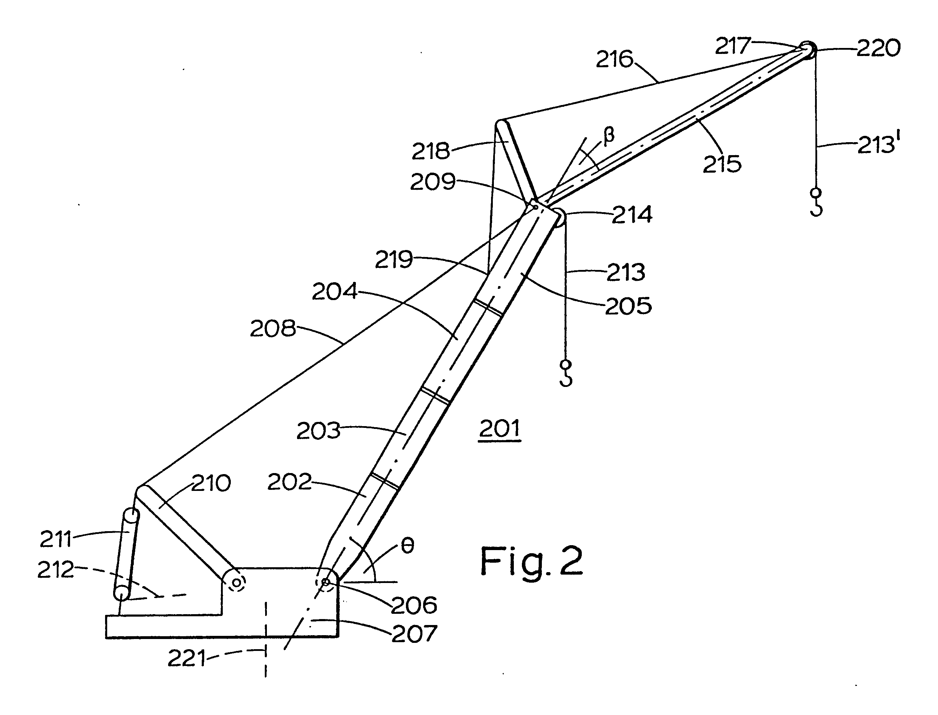

A luffing fly jib may be supported by an hydraulic ram or a screw jack having its ends connected respectively to points on the boom head 117 and the fly jib 118, instead of by the fly rope 122 shown in Figure 2. Alternatively, a fly jib may be rigidly secured to the boom head 117 in such a manner that the fly jib angle $\beta$ is constant.

Interchangeable fly jibs of differing lengths may be provided, or the fly jib may itself be extensible.

Turning now to Figure 2, the crane illustrated thereby has a boom indicated generally by the reference numeral 201, comprising a base section 202, a first intermediate section 203, a second intermediate section 204 and a head section 205 joined together in end-to-end relationship. The various sections are typically of lattice-girder construction. The length of the boom 201 may be varied in discrete steps by omitting one or both of the intermediate sections 203 and 204 or by adding further similar sections. It will be appreciated that unlike a telescopic boom, the length of such a strut-type boom can be changed only when the crane is unladen and the boom lowered for access.

The lower end of the base section 202 is pivoted for luffing movement about a horizontal axis 206 to a superstructure 207, which is itself mounted for slewing movement about an axis 221 on a vehicle chassis (not shown in Figure 2) of the general type described hereinbefore with reference to Figure 1.

The boom 201 is supported at a luff angle $\theta$ by a luffing rope 208 which is secured to the head section 205 at a point 209 and passes over a strut 210 mounted on the superstructure 207 to a luffing tackle 211. The fall 212 of the tackle 211 is led to a luffing winch (not shown in Figure 2) mounted on the superstructure 207. The luff angle $\theta$ may thus be varied by hauling in or paying out the tackle 211. Alternatively, the boom may be supported by an hydraulic ram similarly arranged to the ram 108 of Figure 1. As another alternative the strut 210 can be omitted.

A hoist rope 213 passes over a sheave 214 mounted at the head of the boom 201 to a hoist winch (not shown in Figure 2) mounted on the superstructure 207.

To extend the reach of the crane for light loads, a fly jib 215 may have its inner end attached to the head of the boom 201. A fly rope 216 is secured to the outer end 217 of the fly jib 215 and passes over a strut 218 mounted at the boom head to an anchorage 219 on the section 205 of the boom 201. The fly jib 215 is thus supported with its axis at a fixed angle $\beta$ to the axis of the boom 201. Alternatively, the fly jib 215 may be supported by an arrangement similar to that described hereinbefore with reference to Figure 1 so as to permit of the fly jib angle $\beta$ being varied.

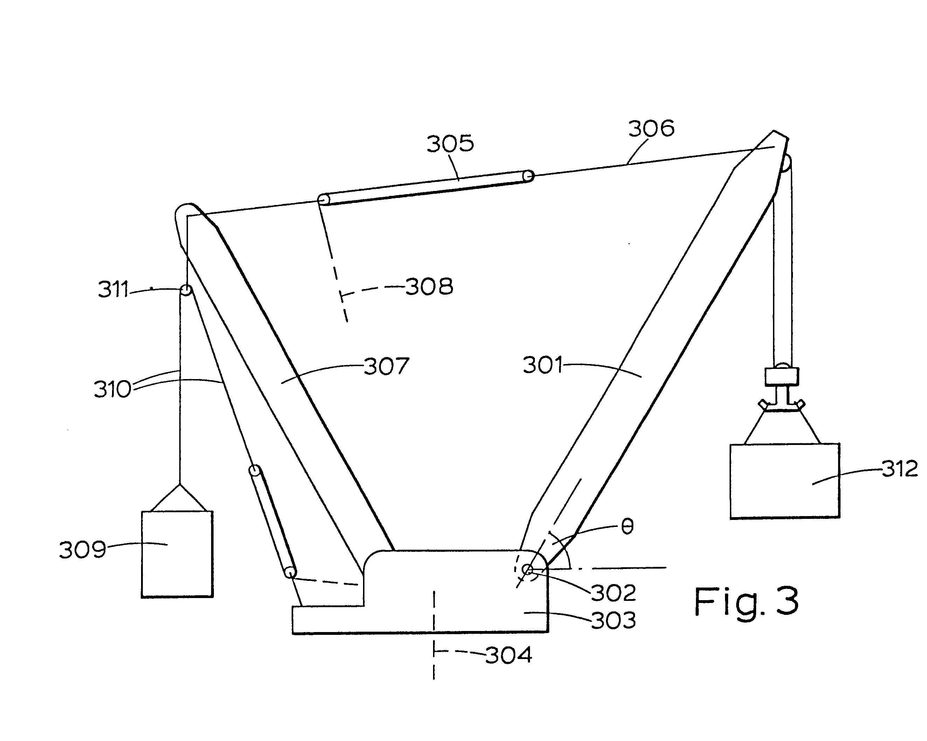

Turning now to Figure 3, there is illustrated a counter-balance arrangement whereby a mobile crane may be enabled to lift a load which would otherwise exceed the stability or structural limits of the crane. The crane illustrated has a boom 301 pivoted for luffing movement about a horizontal axis 302 to a superstructure 303. The superstructure 303 is mounted for slewing movement about a vertical axis 304 on a vehicle chassis, not shown in Figure 3, which may be of the general type hereinbefore described.

The boom 301 is supported at a luff angle $\theta$ with respect to a horizontal plane by a luffing tackle 305 whose one end is connected by a guy 306 to the head of the boom 301, and whose other end is connected to the head of a mast 307 mounted on the superstructure 303 on the side opposite to the boom 307. The fall 308 of the tackle 305 is taken to a luffing winch (not shown) mounted on the superstructure 303, the arrangement being such that the luff angle $\theta$ can be varied by hauling in or paying out the tackle 305.

A counterweight 309 is supported by a cable 310 which passes over a sheave 311 attached to the head of the mast 307 to a winch (not shown in Figure 3) mounted on the superstructure 303.

The resultant moment tending to capsize the crane is the algebraic sum of the moment produced by a load 312 suspended from the boom 301 and the moment produced by the counterweight 309. Since the counterweight moment is of opposite sign to the load moment, the effect of the counterweight is to reduce the capsizing moment when the crane is lifting a heavy load.

Counterbalance systems are most commonly applied to mobile cranes having strut-type booms as shown in Figure 3, but may also be applied to other types of crane, e.g. telescopic boom cranes.

It is to be understood that the features described hereinbefore with reference to Figures 1, 2 and 3 are merely examplary, and that particular cranes may comprise various combinations of these and other features.

It can readily be seen that cranes such as those described with reference to Figures 1, 2 and 3 possess a multiplicity of differing modes of operation.

Each combination of a plurality of factors such as presence or absence of fly-jib, length of fly jib, fly jib angle, actual length of boom where this is variable in discrete steps, manual extension of a telescopic boom and chassis blocked or free on wheels will produce a separate mode of operation. Account must also be taken of the slewing angle. Since the stability of the crane will not, in general, remain constant as the superstructure is rotated through a full circle, differing families of operating modes will apply when slewing is restricted to particular sectors, e.g. with the boom extended over an end or over a side of the chassis and when a full-circle slewing capability is required. Account must also be taken of the effect on the crane's stability of longitudinal and/or lateral cant of the chassis, such as may be produced by operation of the crane on sloping ground, or by uneven sinking of the wheels or outrigger feet, as the case may be, into relatively soft ground.

In load indicating arrangements for use with such cranes it is known to provide sensors which are mounted on the crane so as to measure the various parameters needed to compute the stability of the crane in all modes of operation. Analogue sensors may be employed to measure those parameters whose values can vary continuously, such as boom luff angle $\theta$, fly jib angle $\beta$ , superstructure and chassis cants, extension of a telescopic boom, and the force sustained by the boom support means in supporting the boom and any load suspended therefrom.

The various angles may be measured by respective pendulum-type angle sensors. A damped heavy pendulum is connected to the shaft of a low-torque precision potentiometer, the track of which is connected across a precision reference voltage supply. The potentiometer is mounted on a portion of the crane structure in such a manner that the voltage developed at the slider of the potentiometer is proportional to the inclination of that portion of the structure.

Boom extension may be measured by means of a multi-turn precision potentiometer mechanically coupled to the boom so that its shaft is turned proportionally as the boom extends or retracts. A precision reference voltage supply is connected across the potentiometer track, the arrangement being such that the voltage developed at the slider of the potentionmeter is proportional to the boom extension.

When the boom support means is a luffing rope, as shown in Figure 2 at 208, the boom support force may be measured by a suitable load cell responsive to the tension in the luffing rope 208. Similarly, a load cell may be employed to measure the tension in a fly rope such as that shown in Figure 1 at 122.

When the boom support means is an hydraulic ram (108, Figure 1) a pressure transducer may be connected in the hydraulic feed to the ram so as to produce a signal proportional to the force exerted by the ram in supporting the boom. Alternatively, strain gauges may be provided to measure the shear stress or the bending moment in a ram pivot pin (e.g. 110, Figure 1) both of which are a function of the force exerted by the ram, i.e. of the boom support force.

Irrespective of the particular type of boom support means employed in a given crane, the total turning moment about the boom pivot point due to the weight of the boom assembly (including fly jib if fitted) and any load suspended therefrom is opposed by the component of the boom support force normal to the axis of the boom. If the angle between the boom support means and the boom axis can be determined, the measured signal representative of the boom support force can be modified to provide a signal representative of the total turning moment. Referring to Figure 1a it will be seen that the angle $\phi$ between the axis 127 of the ram 108 and the axis 107 of the boom 101 can be determined by solution of the triangle formed by the pivot points 105, 109 and 110, since the respective distances between
the pairs of points 105, 109 and 105, 110 are known constants and
the angle at the vertex 105 can be determined from the luff angle $\theta$,
measured with respect to the horizontal, and the angle $\delta$ between
the side 105/109 and the horizontal. The angle $\delta$ comprises a constant
component $\delta'$ determined by the geometry of the superstructure 106 plus
a variable component $\delta''$ determined by the cant of the superstructure
in the direction in which the boom is extended. For this reason an
angle sensor may be provided to measure superstructure cant, independently of any longitudinal and transverse cant of the chassis 111.

In arrangements such as those of Figures 2 and 3, where the
boom support means comprises a luffing rope, the angle between the
boom axis and the support means axis may similarly be determined from
the geometry of the crane structure, the luff angle $\theta$ and the cant
of the superstructure.

Digital sensors such as switches or shaft encoders may be provided
to monitor the presence or position of various crane structures,
for example to detect the presence of a fly jib, the extension of
a manual section of the main boom, outrigger position and whether the
boom is extended over front, side or rear of the chassis.

In general, an analogue sensor may be provided in respect of
each parameter of the crane which is independently variable in use,
and a digital sensor in respect of each parameter which can have
two or more discrete values. Thus the number of sensors in any given
case depends on the design of the particular crane for which the
load indicating arrangement is provided.

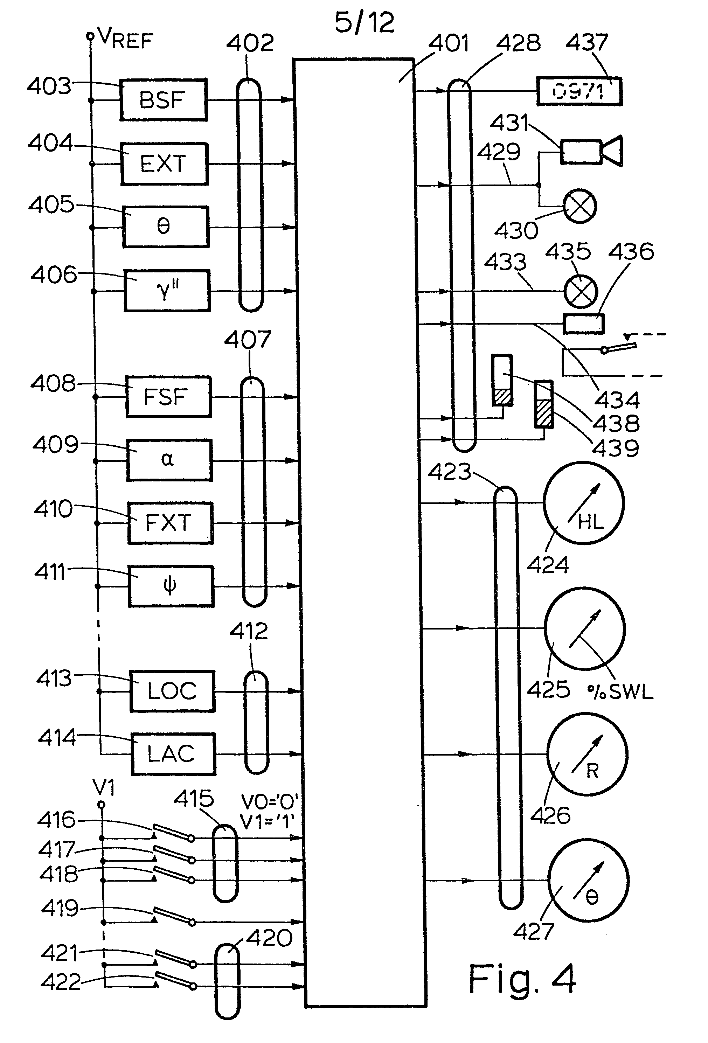

An embodiment of the present invention suitable for use on a
mobile crane having a telescopic boom with a manual extension section
and, optionally, a luffing fly jib will now be described. Referring
first to Figure 4 a digital computer is indicated generally by
the reference numeral 401. Inputs to the computer 401 from crane
mounted sensors include a group 402 of analogue inputs produced by
sensors associated with the main boom. Typically, such sensors
comprise a sensor 403 for measuring boom support force (BSF), a sensor
404 for measuring boom extension (EXT), a sensor 405 for measuring

boom luff angle ($\theta$) with respect to the horizontal and a sensor 406 for measuring superstructure cant ($\gamma''$).

A group 407 of analogue inputs is produced by sensors associated with the fly jib, including a sensor 408 for measuring tension in the fly support rope (i.e. effective fly support force FSF), a sensor for measuring the angle ($\alpha$) of the fly support rope, a sensor 410 for measuring fly jib extension (FXT) and a sensor 411 for measuring an angle ($\psi$) which is the fly jib angle relative to the horizontal.

A further group 412 of analogue inputs is produced by sensors associated with the crane chassis, including sensors 413 and 414 for measuring, respectively, the longitudinal and the lateral cant (LOC), (LAC) of the chassis.

Digital inputs to the computer 401 include a first group 415 from sensors responsive to the slewing position, for example switches 416, 417 and 418, which are respectively closed only when the boom extends over the front, the rear or a side of the chassis. A further digital input is provided by a switch 419 closed only when the outriggers are extended and blocked up from the ground. A group 420 of digital inputs is produced by sensors responsive to boom configuration, for example a switch 421 closed only when a manually extensible section of the main boom is extended and a switch 422 closed only when the fly jib is fitted. It will be appreciated that if the design of the crane so requires, more or fewer inputs, both analogue and digital, may be provided. The various analogue sensors are connected to a reference voltage supply $V_{REF}$. The digital sensors produce an output of V0 (= logic 0) or V1 (= logic 1) according as the relevant switch is open or closed.

Typical outputs from the computer unit 401 shown in Figure 4 comprise a group 423 of analogue outputs for driving displays such as meters 424 to 427 indicating for example, hook load (HL), percentage of safe working load (% SWL), load radius (R) and luff angle ($\theta$), respectively. A group 428 of digital outputs may typically include an output 429 for energising a warning lamp 430 and/or an audible warning 431 if the actual load exceeds a first set percentage of the safe working load (warning), and outputs 433 and 434 for operating respectively a lamp 435 and/or a contact-breaker 436 when the actual load exceeds a further set percentage of the safe working load (alarm/trip). The contacts of the breaker 436 are connected in the drive circuits for the various crane motions so as to prevent operation of the crane in a sense such as further to increase its loading when the trip level has been reached. Optionally, a plurality of alarm/trip outputs may be provided, for example, separate trips for derricking and slewing motions. Thus the crane may be prevented from slewing from a safe into an unsafe position. Other trip facilities may include load radius, boom extension, boom head height, etc. These latter trip facilities may be settable by the crane driver, to facilitate safe working of the crane in the presence of of obstructions such as overhead power lines, bridges, etc.

Other digital outputs may be provided for operating a variety of displays, for example a digital readout 437 of load radius, and/or bar-graph displays 438 and 439 showing, respectively, hook load and safe working load.

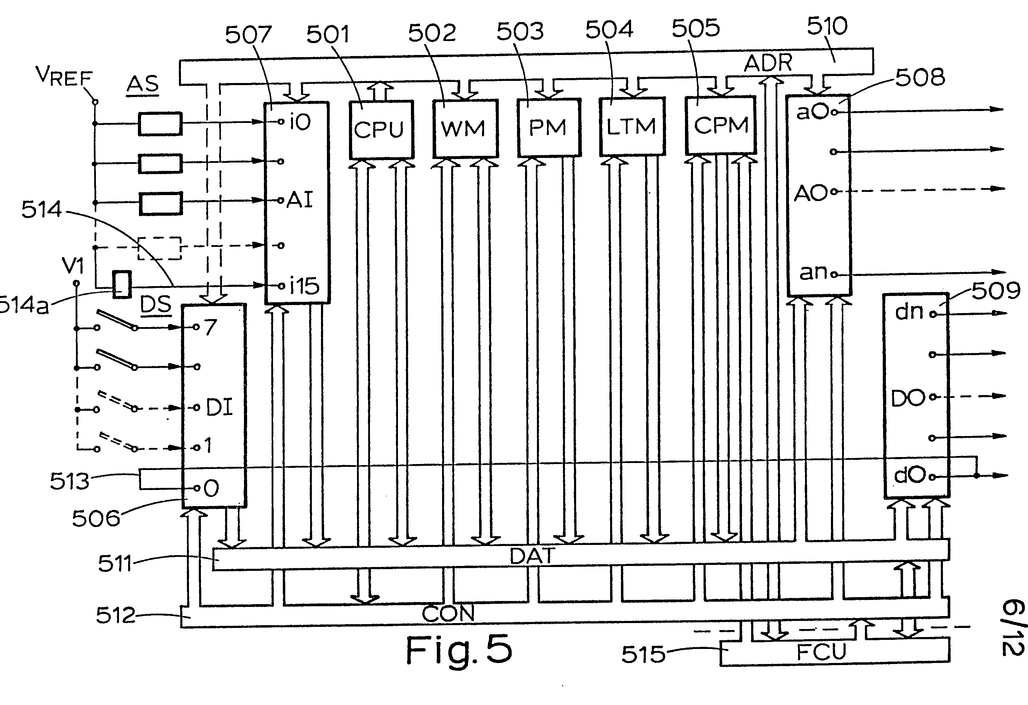

The basic structure of the computer 401 will now be considered with reference to Figure 5. This basic structure is based on a general purpose microprocessor 501 which serves as a Central Processor Unit (CPU). Associated with the microprocessor 501 are various external memories 502 to 505, input units 506, 507 and output units 508, 509. These memories and units can be implemented using commercially available memory and interface devices. The microprocessor 501 can be the commercially available Type 8085A Microprocessor marketed by Intel Corporation. It will be evident, however, that other commercially available microprocessors may alternatively be used.

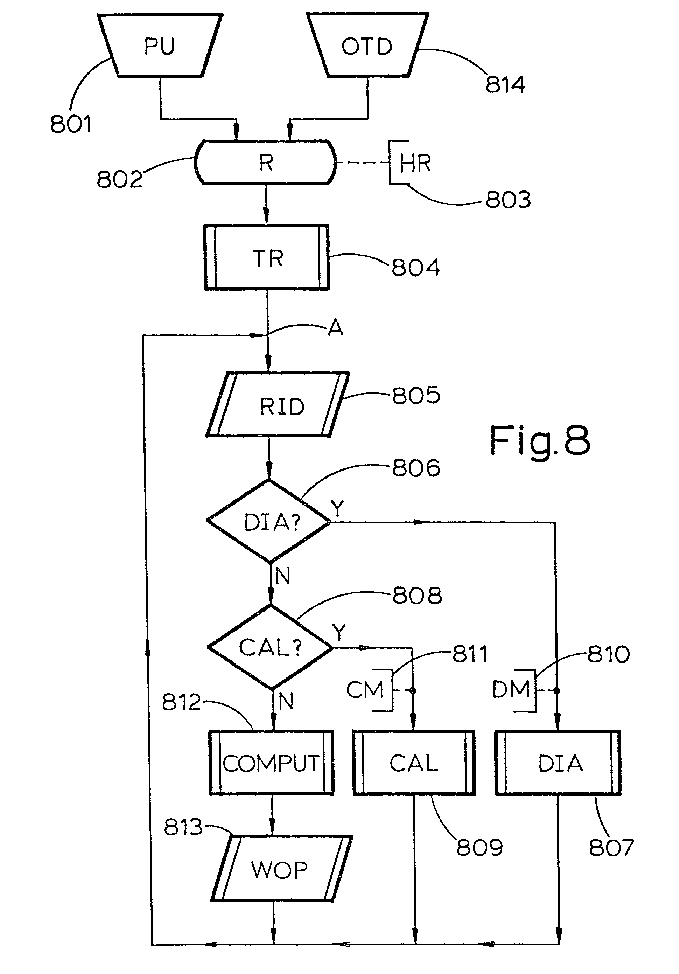

The specific structure, organisation and manner of programming the Intel 8085A microprocessor is readily available in published manuals and literature, such as the manual "Intel 8085A Single Chip 8-bit N-Channel Microprocessor", published by Intel Corporation. The whole contents of this manual, which is available from suppliers of Intel devices both in the United Kingdom and other countries, are hereby incorporated by reference into the present specification. The computer uses known data processing techniques to calculate the relationship between the actual loading

and the maximum safe loading of a crane in its prevailing configuration
(i.e. for the current mode of operation and the existing value of
load radius or luff angle, as the case may be) in terms of parameters
measured by sensors as described with reference to Figure 4 and of
data stored in the memories 504 and 505 to be described hereinafter.
The manner in which the programming should be effected to perform
this function will be described presently with reference to the flow
charts of Figure 8 to 13.

The memory 502 is a static random access read/write working
memory (WM) used for temporary storage of data during the computations
by the microprocessor (CPU) 501. The control program for the
CPU 501 is stored in a program memory (PM) 503 which is a read-only
memory. Crane load tables are stored in a (data) load table memory
(LTM) 504 which is a factory-preprogrammed read-only memory. The
crane "personality", or fixed parameters, peculiar to an individual
crane, such as dimensions, weights, etc., are stored in a crane
personality memory (CPM) 505. The memory (CPM) 505 is programmed
during calibration of the arrangement when installed on a crane.
After it has been programmed, the memory (CPM) 505 is required to
function as a non-volatile read-only memory. It may be comprised
by at least one Electrically Alterable Read-Only Memory (EAROM) device,
for example General Instrument Type ER 3400, which has the feature
that a data word stored in a particular location may be electrically
erased and another data word substituted without affecting data
stored in other locations in the memory device. This selective
electrical erasure and reprogramming facility permits the ready
correction of small errors made during calibration.

A digital input buffer unit (DI) 506 accepts signals from the
digital sensors DS mounted on the crane, as described with reference
to Figure 4 and outputs these signals, under program control, over
a data bus (DAT) 511 to the (CPU) 501 or the (WM) 502 as required
by the programme, as will be described. Typically, the inputs to
(DI) 506 are arranged in groups of eight (one group 0 to 7 only being
shown), of which inputs 1 to 7 come from respective digital sensors,
while the eighth input 0 is connected as shown by connection 513 to
an output 0 of a digital output unit (DO) 509 (to be described hereinafter).  The connection 513 is provided for use in test routines incorporated in the control programme.  Signals corresponding to a particular group of inputs from digital sensors DS are outputted over the data bus (DAT) 511 as one byte comprising eight data bits one of which is a test bit.  Thus the (DI) 506 can accept inputs from digital sensors DS in multiples of seven and output them as separate bytes, each byte including a test bit.  The digital output unit (DO) 509 comprises a plurality of individually addressable latch circuits one such circuit being provided in respect of each digital output d0 to dn required.

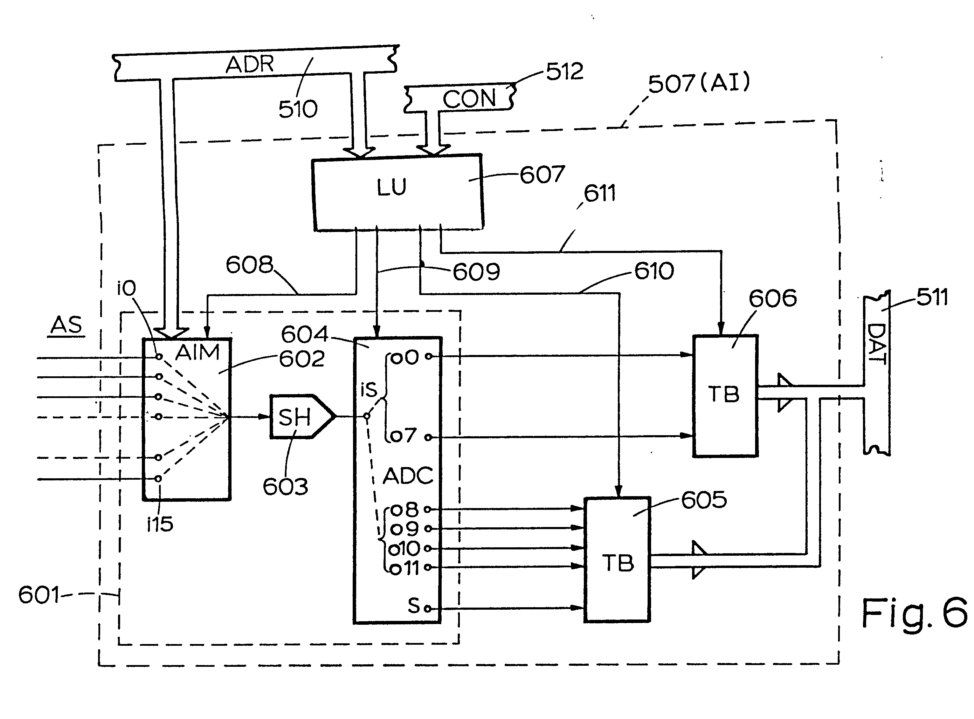

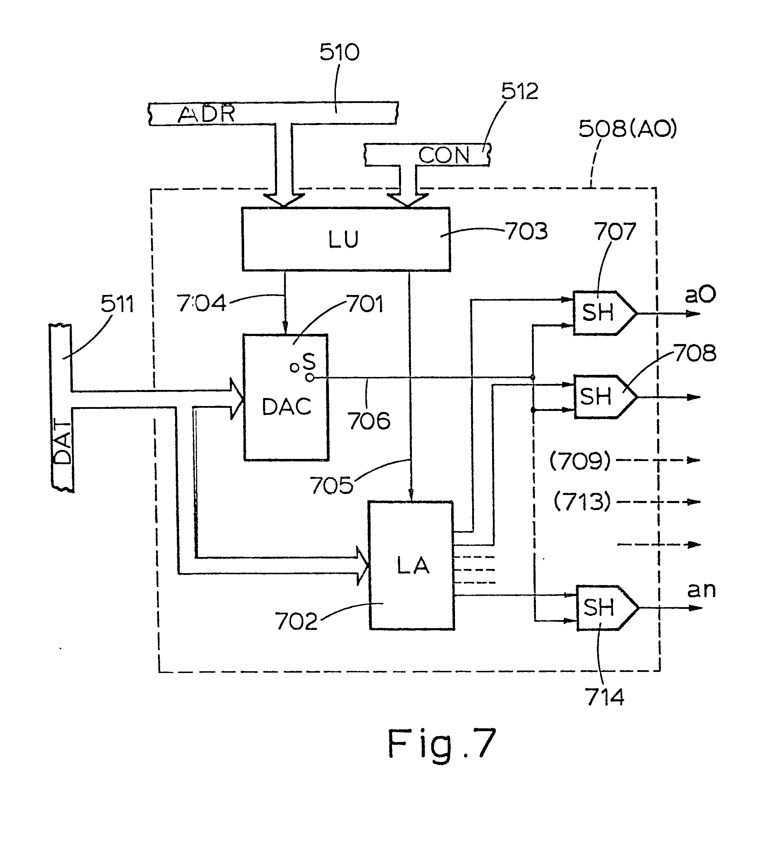

Analogue input signals from the various analogue sensors AS mounted on the crane are applied to respective inputs of an analogue input unit (AI) 507 which will be described in more detail with reference to Figure 6.  At least one input of (AI) 507 is connected directly by a connection 514 to the reference voltage supply $V_{REF}$ for the analogue sensors AS, this connection also being for test routine purposes.  Figure 5 also shows an analogue output unit (AO) 508, which will be described in more detail with reference to Figure 7, and a field calibration unit (FCU) 515.  This latter unit provides access to the computer for carrying out calibration of the arrangement when mounted on a crane.  In addition to the data bus (DAT) 511, a separate address bus (ADR) 510 and a control bus (CON) 512 are shown interconnecting the various elements of the computer.  However, in certain types of microprocessor, for instance the Intel 8085A, a common address/data bus is used on a multiplex basis, but these two buses have been shown separately in Figure 5 for the sake of simplicity and to render the figure more generally applicable.

Referring now to Figure 6, the analogue input unit (AI) 507 comprises an analogue data acquisition module which is represented by the broken line rectangle 601.  This module 601 comprises an analogue input multiplexer device (AIM) 602 having input terminals i0 to i15 which provide 16 single-ended or 8 differential input signal channels, which are individually addressable by (CPU) 501 – Figure 5 over the address bus (ADR) 510.  When a particular channel is addressed, the value of the corresponding analogue input signal is stored in a sample-and-hold circuit (SH) 603.  The output of the circuit 603 is connected to a single input iS of an analogue-to-digital converter (ADC) 604 which produces at its output terminals o0 to o11 a 12-bit digital signal corresponding to the analogue signal sampled at the particular input channel.  The (ADC) 604 also produces at a terminal S a status signal signifying either conversion in progress or conversion complete.  The four most significant bits (8-11) of the 12-bit signal, together with the status bit  S are outputted as one byte to the data bus (DAT) 511 via an 8-bit tri-state buffer (TB) 605.  The lower eight bits (0-7) of the 12-bit signal are then outputted as a second byte to the data bus (DAT) 511 via a second 8-bit tri-state buffer (TB) 606.

A logic unit (LU) 607 is provided to decode the addresses on bus (ADR) 510 and the control signals on bus (CON) 512 to provide a channel latch  signal on connection 608 for the multiplexer (AIM) 602, a start conversion signal on connection 609 for the converter (ADC) 604, and respective enable signals on connections 610 and 611 for the buffers (TB) 605 and (TB) 606.

Analogue output signals (up to 8 in the present embodiment) are produced by the analogue output unit (AO) 508, which is shown in greater detail in Figure 7.  The unit (AO) 508 comprises a digital-to-analogue converter (DAC) 701, an 8-bit latch unit (LA) 702, and a logic unit (LU) 703.  The unit (LU) 703 decodes address data from the address bus (ADR) 510 and control signals from the control bus (CON) 512 to produce respective enable signals on connections 704 and 705 for the unit (DAC) 701 and the unit (LA) 702.  Digital output data from the unit (CPU) 501 (Figure 5) is applied over the data bus (DAT) 511 to the unit (DAC) 701 which, when enabled by the enable signal on connection 704 produces at a single output oS a corresponding analogue signal.  The output oS is connected    via a connection 706 to respective signal inputs of eight sample-and-hold circuits (SH) 707 to 114.  The unit (CPU) 501 applies to the latch unit over the data bus (DAT) 511 select signals in response to which the unit (LA) 702 selects the particular one of the sample-and-hold circuits (SH) 707 to 714 which is to receive the analogue signal at the output oS. The circuits (SH) 707 to 714 have respective analogue outputs a0 to an: (= 8) · in the present embodiment).

Flow charts for    the programming of the computer of the load indicating arrangement are shown in Figures 8 to 13. Symbols employed in these flow charts have the meanings ascribed to them in British Standards Specification BS 4058 : 1973 - "Specification for data processing flow chart symbols, rules and conventions", the contents of which are herein incorporated by reference. Abbreviations. employed in the flow charts have the meanings ascribed to them in the Table given at the end of the specification,

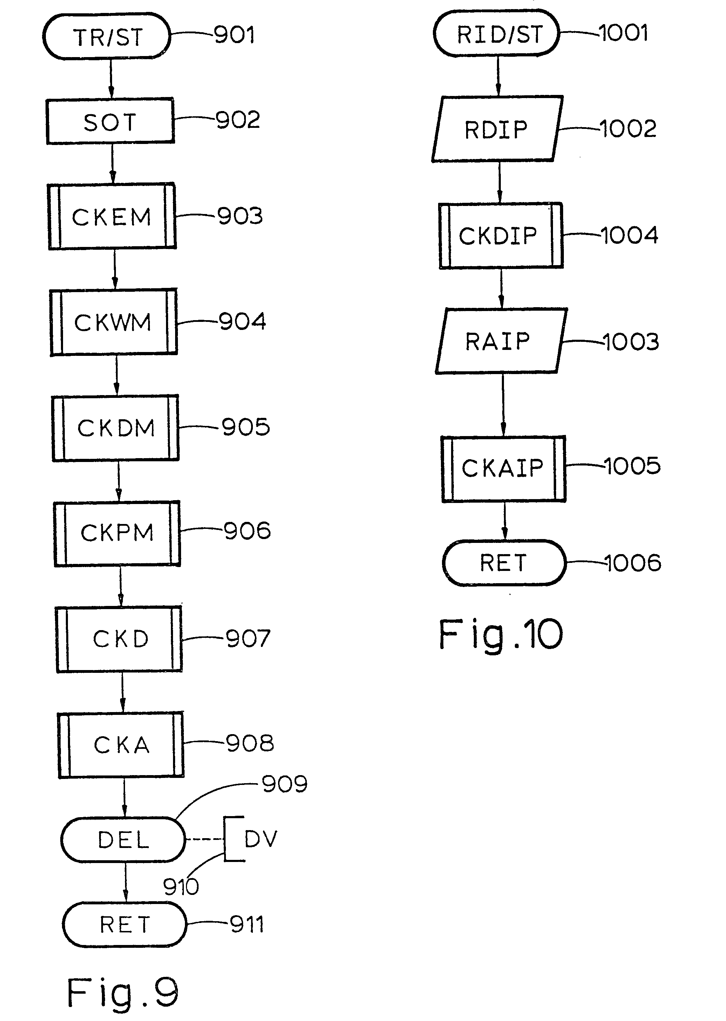

Referring to Figure 8, which shows a flow chart for the control program for the unit (CPU) - 501. Symbol 801 - PU (Power Up) represents the initial manual off-line process of applying the appropriate voltage supply to the load indicating arrangement in the course of bringing the crane on which the arrangement is mounted to an operational condition. Symbol 802 - R (Reset) represents the resetting of the entire arrangement, including the resetting of external sensor switches, etc., as indicated by the symbol 803 - HR (Hardware Reset). Following the resetting step, the control program enters a test routine, as represented by the symbol 804 - TR (Test Routine),which will be described next with reference to the flow chart shown in Figure 9. Assuming that the test routine TR is successfully completed, showing that the load indicating arrangement is operational, the control program enters its main operational phase at point A. The symbol 805 - RID (Read Input Data) represents an input routine in which signals produced  by the various analogue and digital sensors, as described previously with reference to Figure 4, are read and their values temporarily stored. Figure 10 (to be described) shows a flow chart for this input routine. The symbol 806 - DIA? (Diagnostic Mode?) represents a decision whether (Y) or not (N) to enter a diagnostic routine as represented by the symbol 807 - DIA (Diagnostic Routine). Similarly, the symbol 808 - CAL? (Calibration Mode?) represents a decision whether (Y) or not (N) to enter a calibration routine as represented by the symbol 809 (Calibration Routine). The diagnostic and calibration routines, together with the circumstances in which they are entered, will be considered hereinafter. Each of these routines requires some external involvement as indicated by the respective symbols 810 - DM (Diagnostic) and 811 - CM (Calibration).

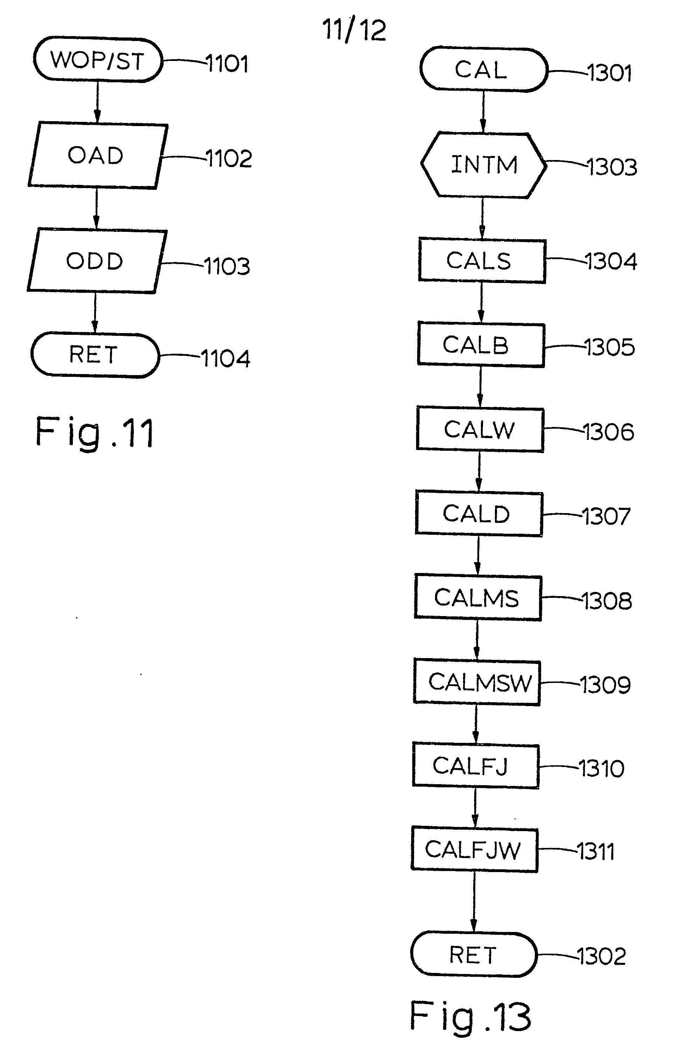

For normal operation the control program will not enter either the diagnostic or the calibration routine but instead will proceed to enter a functional routine as represented by the symbol 812 - COMPUT (Functional Routine). This functional routine, which will be described presently with reference to the flow chart shown in Figure 12, provides the output data for the load indicating arrangement. An output routine in which the output data is converted into the appropriate analogue and digital output signals, as described previously with reference to Figure 4, is represented by the symbol 813 - WOP (Write Output Data). Figure 11 (to be described) shows a flow chart for this output routine.

The symbol 814 - OTD (Operator Test Demand) represents external manual control by which an operator can reset the control program to start at the beginning.

The test routine TR, as represented by the flow chart shown in Figure 9, is entered into at a starting point represented by the symbol 901 - TR/ST (Start). The symbol 902 - SOT (Set Outputs to Test Mode) represents the production of the appropriate output signals of values such that all alarms are tested. The symbols 903 - CKEM (Check Program Memory), 904 - CKWM (Check Working Memory), 905 - CKDM (Check Data Memory), and 906 - CKPM (Check Crane Personality Memory), represent respective sub-routines for checking the data stored in, and the operation of, these different memories. Each of the sub-routines which is used, is known in the art. For instance, so-called "check-sum" sub-routines can be used for the read-only memories (PM, LTM and CPM - Figure 5), involving the arithmetic summing of all of the data contained within a memory or part of a memory and comparing this sum with a predetermined value. For the random-access write/read memory, a "non-destructive read-write" sub-routine can be used, involving reading a data byte from the memory, storing it elsewhere temporarily, inverting it, writing the inverted data into the original memory location, reading it again, inverting this last value, checking to see whether the resultant data byte is the same as the data byte read originally, and re-writing the original data into the memory location. The symbol 907 - CKD (Check Digital Inputs/Outputs) represents a sub-routine which checks all possible input/output data combinations. This sub-routine comforms to a known error-checking technique and involves the checking of groups of 7 digital input signals on the basis of the common input/output connection 513 (Figure 5). Similarly, the symbol 908 - CKA (Check Analogue Inputs/Outputs) represents another sub-routine which is included in the input routine RID. This latter sub-routine will therefore be considered more fully when Figure 10 is described.

The symbol 909 - DEL (Delay) represents a delay instruction of, say, 1 second during which display information as brought about by the checks on the digital and analogue outputs by the sub-routines CKD and CKA can be verified by an operator. This display verification is represented by the symbol 910 - DV (Display Verification). The symbol 911 - RET (Return) represents the ending point of the test routine TR.

The input routine RID, as represented by the flow chart shown in Figure 10, is entered into at a starting point represented by the symbol 1001 - RID/ST (Start). The symbol 1002 - RDIP (Read Digital Inputs) and the symbol 1003 - RAIP (Read Analogue Inputs) represent the instructions for inputting the digital and analogue signals (See Figure 4) into the computer. The symbol 1004 - CKDIP (Check Digital Inputs) represents a sub-routine for checking for faults in the digital input signals. This sub-routine involves the checking of groups of 7 digital input signals on the basis of the common input/output connection 513 (Figure 5). If the signal conditions of the digital signal output d0 and the digital signal input 0 of a group are not the same then there is a fault in that group and an error flag is set to indicate the fault. This sub-routine conforms to a known error-checking technique. The symbol 1005 - CKAIP (Check Analogue Inputs) represents a sub-routine for checking for faults in the analogue input signals. This sub-routine involves checking that the signal conditions on the input terminals i0 to i15 (Figure 6) for each group of analogue input signals in turn as identified from the address bus 510, are within predetermined limits. The accuracy of this check is effected by measuring the voltage on the text connection 514 (Figure 5), which voltage is a predetermined fraction of the reference voltage $V_{REF}$ as produced by a precision potentiometer device 514a. This sub-routine also conforms to a known error-checking technique. This sub-routine CKAIP is that which corresponds to the sub-routine CKA in the flow chart of the test routine TR shown in Figure 9. The symbol 1006 - RET (Return) represents the ending point of the input routine RID.

The output routine WOP, as represented by the flow chart shown in Figure 11, is entered into at a starting point represented by the symbol 1101 - WOP/ST (Start). The signal 1102 - OAD (Output Analogue Data) represents the instruction for outputting the analogue signals (see Figure 4), possibly including the "re-scaling" of at least some of these signal values. The symbol 1103 - ODD (Output Digital Data) represents the instruction for outputting the digital signals (see Figure 4). The symbol 1104 - RET (Return) represents the ending point of the output routine WOP.

The functional routine COMPUT, as represented by the flow chart shown in Figure 12, is entered into at a starting point represented by the symbol 1201 - COMPUT/ST (Start). After this functional routine has been entered into, it involves a succession of computing operations to determine the various parameters from which the values of the required digital and analogue output signals are calculated. These computing operations, each of which involves a separate sub-routine, may be carried out in any sequence, limited only by the need to determine a parameter which is required for a particular sub-routine in an earlier sub-routine. Thus, the flow chart of Figure 12 shows only one of the different possible sequences in which these computing operations can be carried out. The symbol 1202 - CXT (Compute Boom Extension) represents the instruction for determining the actual boom extension from the analogue input produced by the sensor 404 (Figure 4). This first computing operation is for scaling and zeroing of the arrangement. The symbol 1203 - CDSP (Compute Duty Selection Parameters) represents an instruction by which the boom extension, and the different digital inputs from the duty switches such as switches 416 to 418, 419 and 421, 422 are collated. The symbol 1204 - FDTY (Find Duty) represents the instruction for determining from the collated duty parameters the particular duty in which the crane is to operate. The data for this duty may be checked using a "check-sum" routine, such as referred to previously. This checking is done by the instruction represented by the next symbol 1205 - CKDTY (Check Duty) in the flow chart.

The actual dynamic parameters which vary during the operation of the crane are now computed to determine, _inter alia_, the available lifting capacity for the prevailing configuration of the crane. Total boom length L is computed by the instruction represented by the symbol 1206 - CLEN (Compute Boom Length). Boom luff angle $\theta$, fly jib angle $\psi$ and superstructure cant $\gamma''$ are computed by the instruction 1207 - CANG(S) (Compute Boom Angles). The symbol 1208 - CBSF (Compute Boom Support Force) represents the instruction to compute the effective force F by which the boom and any load suspended therefrom is supported. The total turning moment TM of the boom plus load (if any), for instance TM = F sin $\emptyset$ as related to Figure 1 is computed by the instruction represented by the symbol 1208 - CTM (Compute Total Moment). Boom moment BM = wg.cos $\theta$ - wt sin $\theta$ is computed by the instruction represented by the symbol 1210 - CBM (Compute Boom Moment), following which load moment LM = TM - BM is computed by the instruction represented by the symbol 1211 - CLM (Compute Load Moment).

As explained at the beginning of the specification, correction for boom deflection is also required. This boom deflection correction $\delta \mathrel{\triangle} K.LM.L^2$, where K is a constant which takes into account Youngs Modulus in respect of the boom structure and the Moment of Inertion of the boom, is provided for in the functional routine by the instruction represented by the symbol 1212 - CBDC (Compute Boom Deflection Correction). Another correction factor which is related to the computation of load radius is boom head offset S = $\delta$ + UD, where UD is the fixed (undeflected) component of the offset. This offset factor is computed by the instruction represented by the symbol 1213 - COFF (Compute Boom Head Offset). The load radius R = r - d, where r = L cos $\theta$ + S sin $\theta$ and d is the distance between the boom pivot point and the slewing centre is computed by the instruction represented by the symbol 1214 - CLR (Compute Load Radius). The hook load HL = LM/r is computed by the instructions represented by the symbol 1215 - CHL (Compute Hook Load). Safe working load SWL = (f) R or $\theta$ is a linear interpolation of radius R or luff angle $\theta$ according as, respectively, radius-related or angle-related duties are involved. The instruction represented by the symbol 1216 - CSWL (Compute Safe Working Load) provides for this calculation. The percentage of safe working load % SWL = (HL/SWL) x 100 is provided for by the instruction represented by the symbol 1217 - CPSWL (Compute % Safe Working Load). Finally alarm conditions, for instance when the permitted percentage of safe working load is exceeded (i.e. % SWL > $106\frac{1}{4}$% and % SWL > 110%) are provided for by the instruction represented by the symbol 1218 – CALM (Compute Alarm Conditions). The symbol 1219 – RET (Return) represents the ending point of the functional routine COMPUT.

The calibration routine CAL is illustrated in outline by the flow chart shown in Figure 13. It is entered into at a starting point represented by the symbol 1301 – CAL/ST (Start), and exited at an ending point represented by the symbol 1302 – RET (Return). The symbol 1303 – INTM (Initialise Memory) represents an initialising instruction which invloves setting the crane personality memory (CPM – Figure 5) to a "safe" condition by setting flags to indicate that each part of the memory does not yet include calibration data. This instruction prohibits the use of the crane before the calibration has been completed. The symbol 1304 – CALS (Calibrate Sensors) represents an instruction in which each sensor in calibrated at low and high output, giving zero and scaling parameters. The other symbols 1305 – CALB, 1306 – CALW, 1307 – CALD, 1308 – CALMS, 1309 – CALMSW, 1310 – CALFJ and 1311 – CALFJW represent respective further calibration instructions as listed in the Table given at the end of the specification.

The diagnostic routine simply involves a numbered count through the arrangement to check for any error flags which are set. The particular number associated with each error flag provides immediate identification as to where a fault lies.

TABLE

| 801 | PU | Power Up |
|-----|------|---------------------|
| 802 | R | Reset |
| 803 | HR | Hardware Reset |
| 804 | TR | Test Routine |
| 805 | RID | Read Input Data |
| 806 | DIA? | Diagnostic Mode? |
| 807 | DIA | Diagnostic Routine |
| 808 | CAL? | Calibration Mode? |
| 809 | CAL | Calibration Routine |

| 810 | DM | Diagnostic |
| 811 | CM | Calibration |
| 812 | COMPUT | Functional Routine |
| 813 | WOP | Write Output Data |
| 814 | OTD | Operater Test Demand |
| 901 | TR/ST | Start |
| 902 | SOT | Set Outputs to Test Mode |
| 903 | CKEM | Check Programme Memory |
| 904 | CKWM | Check Working Memory |
| 905 | CKDM | Check Data Memory |
| 906 | CKPM | Check Personality Memory |
| 907 | CKD | Check Digital Inputs/Outputs |
| 908 | CKA | Check Analogue Inputs/Outputs |
| 909 | DEL | Delay |
| 910 | DV | Display Verification |
| 911 | RET | Return |
| 1001 | RID/ST | Start |
| 1002 | RDIP | Read Digital Inputs |
| 1004 | CKDIP | Check Digital Inputs |
| 1003 | RAIP | Read Analogue Inputs |
| 1005 | CKAIP | Check Analogue Inputs |
| 1006 | RET | Return |
| 1101 | WOP/ST | Start |
| 1102 | OAD | Output Analogue Data |
| 1103 | ODD | Output Digital Data |
| 1104 | RET | Return |
| 1201 | COMPUT/ST | Start |
| 1202 | CXT | Compute Boom Extension |
| 1203 | CDSP | Compute Duty Selection Parameters |
| 1204 | FDTY | Find Duty |
| 1205 | CKDTY | Check Duty |
| 1206 | CLEN | Compute Boom Length |
| 1207 | CANG | Compute Boom Angles |
| 1208 | CBSF | Compute Boom Support Force |
| 1209 | CTM | Compute Total Moment |
| 1210 | CBM | Compute Boom Moment |

| 1211 | CLM | Compute Load Moment |
|------|------|------|
| 1212 | CBDC | Compute Boom Deflection Correction |
| 1213 | COFF | Compute Boom Head Offset |
| 1214 | CLR | Compute Load Radius |
| 1215 | CHL | Compute Hook Load |
| 1216 | CSWL | Compute Safe Working Load |
| 1217 | CPSWL | Compute % Safe Working Load |
| 1218 | CALM | Compute Alarm Conditions |
| 1219 | RET | Return |
| 1301 | CAL/ST | Start |
| 1302 | RET | Return |
| 1303 | INTM | Initialise Memory |
| 1304 | CALS | Calibrate Sensors |
| 1305 | CALB | Calibrate Basic Boom Dimensions |
| 1306 | CALW | Calibrate Basic Boom Weight |
| 1307 | CALD | Calibrate Boom Deflection |
| 1308 | CALMS | Calibrate Manual Section Dimensions |
| 1309 | CALMSW | Calibrate Manual Section Weight |
| 1310 | CALFJ | Calibrate Fly jib Dimensions |
| 1311 | CALFJW | Calibrate Fly Jib Weight |

The theoretical diagram shown in Figure 1b illustrates certain of the parameters which are determined by the computer. In this figure $p$ represents the boom pivot point, $w$ represents the weight of the boom structure acting at the centre of gravity, and $g$ represents the distance between $p$ and $w$. The parameters L, $s$, $\theta$, $d$, $r$ and R are also shown. It is important to appreciate that boom moment M, which is the turning moment of the boom structure about the boom pivot $p$, comprises the basic component wg.cos $\theta$, minus the component wt.sin $\theta$ which is due to the offset distance $t$ of the centre of gravity $w$ from the longitudinal axis of the boom. It is also important to appreciate that the radius $r$, which is the horizontal distance of the load from the boom pivot point, comprises the basic component L cos $\theta$, plus the component S.sin $\theta$ which is due to the offset distance $s$ of the load pivot point from the longitudinal axis of the boom. As referred to Figure 1, the offset distance $s$ = b-a.

In the calibration of the arrangement values of wg and wt are found by measurement for maximum and minimum boom lengths, and also for an intermediate boom length. Linear interpolation is then used to determine a desired number of intermediate values. Such semiautomatic calibration greatly simplifies the setting-up procedure. Separate values for wg and wt would also be determined in similar fashion for each of the fly jib and manual section duties.

CLAIMS:-

1. A load indicating arrangement for use with a crane or other lifting apparatus having a load-supporting boom pivoted for luffing movement about a horizontal axis, which arrangement includes means adapted to produce, in respect of each mode of operation of the lifting apparatus for which the arrangement is provided, a reference output which is representative of maximum safe loading of the lifting apparatus in its prevailing configuration, means for providing a working output which is representative of the actual loading of the lifting apparatus in its prevailing configuration and means responsive to said reference and working outputs to provide an indication of available lifting capacity of the lifting apparatus, is characterised in that the said means comprise a digital electronic computer including load table memory means adapted to store, in respect of each mode of operation of the lifting apparatus, a plurality of items of information pertaining to the rated capacity of the lifting apparatus in that mode, personality memory means adapted to store, in respect of each mode of operation of the lifting apparatus, a plurality of items of information pertaining to parameters of the lifting apparatus which are constant in that mode, data acquisition means adapted to receive and temporarily store a plurality of items of information pertaining to parameters of the lifting apparatus which define the particular mode of operation of the lifting apparatus and a plurality of items of information pertaining to parameters of the lifting apparatus whose magnitude can vary during operation in a defined mode, control memory means adapted to store a control program, and central data processing means responsive to said control program, said control program including a routine for determining the current mode of operation of the lifting apparatus, a routine for determining the prevailing
configuration of the lifting apparatus, a routine for determining said
working output, a routine for determing available lifting capacity of
the lifting apparatus in terms of said reference and working ouputs, and a
routine for producing output signals indicative of and dependent on
the magnitude of said available lifting capacity.

2.    A load indicating arrangement as claimed in Claim 1, wherein
each of said routines includes a sub-routine for checking relevant
data and for setting a respective error flag in the event that data
is absent or erroneous, and wherein said control program includes
a routine for producing an output signal effective to prevent operation
of the lifting apparatus in the event of an error flag being set

3.    A load indicating arrangement as claimed in Claim 1, wherein
said control program includes a test routine enterable on demand.

4.    A load indicating arrangement as claimed in Claim 2, wherein
said control program incudes a test routine enterable on demand or
in the event of an error flag being set.

5.    A load indicating arrangement as claimed in Claim 2 or
Claim 4, wherein said control program includes a diagnostic routine for
detecting faults as signified by set error flags.

6.    A load indicating arrangement as claimed in any preceding
claims, wherein said control program includes a calibration routine
for setting up the arrangement for use in a lifting apparatus.

7.    A load indicating arrangement as claimed in Claim 1, wherein
said control program comprises the following:-

(1)   An initial manual off-line process of applying a voltage
      power supply to the load indicating arrangement:

(2)   An instruction for resetting the entire arrangemnt:

(3)   An instruction for entering a test routine:

(4)   An input routine in which signals produced by analogue and
      digital sensors are read:

(5)   An interrogation instruction whether or not to enter a
      diagnostic rountine:

(6)   An interrogation instruction whether or not to enter a
      calibration routine:

(7)   An instruction for entering a functional routine:

(8)   An output routine in which output data is converted into analogue and digital output signals.


8.   A load indicating arrangement as claimed in Claim 7, wherein functional routine comprises the following instructions:-

(9)   Compute Boom Extension

(10)   Compute Duty Selection Parameters

(11)   Find Duty

(12)   Check Duty

(13)   Compute Boom Length

(14)   Compute Boom Angles

(15)   Compute Boom Support Force

(16)   Compute Total Moment

(17)   Compute Boom Moment

(18)   Compute Load Moment

(19)   Compute Boom Deflection Correction

(20)   Compute Boom Head Offset

(21)   Compute Load Radius

(22)   Compute Hook Load

(23)   Compute Safe Working Load

(24)   Compute % Safe Working Load


9.   A load indicating arrangement as claimed in Claim 8, wherein said functional routine further includes the following instruction:

(25)   Compute Alarm Conditions


10.   A load indicating arrangement as claimed in Claim 7, Claim 8 or Claim 9, wherein said test routine comprises the following:-

(26)   An instruction to test all alarms:

(27)   Respective instructions for checking the data stored in, and the operation of, the different memories:

(28)   A sub-routine for checking the digital inputs and outputs:

(29)   A sub-routine for checking the analogue inputs and outputs:

(30)   A delay instruction for a display verification of the digital and analogue outputs.

11.  A load indicating arrangement as claimed in any preceding claim, wherein said input routine comprises the following:-

(31)  Instructions for inputting the digital and analogue signals:

(32)  Sub-routines for checking for faults in the digital and analogue signals:

12.  A load indicating arrangement as claimed in any one of Claims 7 to 11, wherein said output routine comprises the following:-

(33)  Instructions for outputting the digital and analogue signals

13.  A load indicating arrangement as claimed in any one of Claims 7 to 12, wherein said calibration routine comprises the following:-

(34)  An initialising instruction for setting the personality memory to a "safe" condition:

(35)  An instruction to calibrate sensors:

(36)  An instruction to calibrate basic boom dimensions:

(37)  An instruction to calibrate basic boom weight:

(38)  An instruction to calibrate boom deflection:

(39)  An instruction to calibrate manual section dimensions:

(40)  An instruction to calibrate manual section weight:

(41)  An instruction to calibrate fly jib dimensions:

(42)  An instruction to calibrate fly jib weight:

14.  A load indicating arrangement as claimed in any one of Claims 7 to 13, wherein said diagnostic routine involves a numbered count through the arrangement to check for any error flags which are set.

15.  A load indicating arrangement as claimed in Claim 8, wherein boom moment M is computed from the expression $M = w.g.\cos\theta - w.t.\sin\theta$, where $w$ represents the weight of the boom structure acting at the centre of gravity, $g$ represents the distance between the centre of gravity and the pivot point of the boom structure referred to the longitudinal axis of the boom structure, and $t$ represents the offset distance of the centre of gravity $w$ from the longitudinal axis of the boom.

16. A load indicating arrangement as claimed in Claim 8 or Claim 15, wherein load radius $r$ is computed from the expression $r = L \cos \theta + s. \sin \theta$, where L represents the length of the boom structure, and $s$ represents the offset distance of the load pivot point from the longitudinal axis of the boom.

17. A load indicating arrangement as claimed in Claims 13 and 15, wherein during calibration, values of $wg$ and $wt$ are found by measurement for maximum and minimum boom lengths, and also for an intermediate boom length, whereafter linear interpolation is used to determine a desired number of intermediate values.

18. A load indicating arrangement according to any preceding claim, operatively mounted on a crane or other lifting apparatus having a load-supporting boom pivoted for luffing movement about a horizontal axis.

---

Fig.1

Fig.1a

Fig.1b

Fig. 2

3-XII PP. 2001.

Fig. 3

4-XII PP. 2001.

Fig. 4

Fig. 5

Fig. 6

0035809

0035809

Fig.7

8-XII PP. 2001.

0035809

9/12

Fig.8

9-XII PP. 2001.

0035809

TR/ST —901

SOT —902

CKEM —903

CKWM —904

CKDM —905

CKPM —906

CKD —907

CKA —908

DEL —909 ---[ DV

910

RET —911

Fig.9

RID/ST —1001

RDIP —1002

CKDIP —1004

RAIP —1003

CKAIP —1005

RET —1006

Fig.10

10-XII  PP. 2001.

0035809

**Fig.11**

```
WOP/ST ──1101
   │
   ▼
  OAD ──1102
   │
   ▼
  ODD ──1103
   │
   ▼
  RET ──1104
```

Fig.11

```
  CAL ──1301
   │
   ▼
 INTM ──1303
   │
   ▼
 CALS ──1304
   │
   ▼
 CALB ──1305
   │
   ▼
 CALW ──1306
   │
   ▼
 CALD ──1307
   │
   ▼
CALMS ──1308
   │
   ▼
CALMSW ──1309
   │
   ▼
CALFJ ──1310
   │
   ▼
CALFJW ──1311
   │
   ▼
  RET ──1302
```

Fig.13

11-XII PP. 2001.

0035809

```
      1201
   ┌──────────────┐
   │ COMMPUT/ST   │
   └──────────────┘
          │
      1202│
   ┌──────────────┐
   │     CXT      │
   ├──────────────┤
   │    (404)     │
   └──────────────┘
          │
      1203│
   ┌──────────────┐
   │     CDSP     │
   ├──────────────┤
   │(416,417,418,419,│
   │   421, 422)  │
   └──────────────┘
          │
      1204│
   ┌──────────────┐
   │     FDTY     │
   │              │
   └──────────────┘
          │
      1205│
   ┌──────────────┐
   │    CKDTY     │
   │              │
   └──────────────┘
          │
      1206│
   ┌──────────────┐
   │    CLEN      │
   ├──────────────┤
   │     (L)      │
   └──────────────┘
          │
      1207│
   ┌──────────────┐
   │   CANG(S)    │
   ├──────────────┤
   │  E,γ,φ,ψ,    │
   └──────────────┘
          │
      1208│
   ┌──────────────┐
   │    CBSF      │
   ├──────────────┤
   │     (F)      │
   └──────────────┘
          │
      1209│
   ┌──────────────┐
   │    CTM       │
   ├──────────────┤
   │ (TM=Fsinφ)   │
   └──────────────┘
```

Fig.12

```
                          1210
   ┌──────────────────────┐
   │        CBM           │
   ├──────────────────────┤
   │ (BM=wg.cosθ−wt.      │
   │       sinθ)          │
   └──────────────────────┘
          │
                          1211
   ┌──────────────────────┐
   │        CLM           │
   ├──────────────────────┤
   │   (LM=TM−BM)         │
   └──────────────────────┘
          │
                          1212
   ┌──────────────────────┐
   │       CBDC           │
   ├──────────────────────┤
   │   (δ≙K.LM.L²)        │
   └──────────────────────┘
          │
                          1213
   ┌──────────────────────┐
   │       COFF           │
   ├──────────────────────┤
   │    (S=δ+UD)          │
   └──────────────────────┘
          │
                          1214
   ┌──────────────────────┐
   │        CLR           │
   ├──────────────────────┤
   │[R=(Lcosθ+s.sinθ)     │
   │        −d]           │
   └──────────────────────┘
          │
                          1215
   ┌──────────────────────┐
   │        CHL           │
   ├──────────────────────┤
   │    (HL=LM/r)         │
   └──────────────────────┘
          │
                          1216
   ┌──────────────────────┐
   │       CSWL           │
   ├──────────────────────┤
   │  [SWL=(f)Rorθ]       │
   └──────────────────────┘
          │
                          1217
   ┌──────────────────────┐
   │       CPSWL          │
   ├──────────────────────┤
   │[%SWL=HL/SWL×100/1]   │
   └──────────────────────┘
          │
                          1218
   ┌──────────────────────┐
   │       CALM           │
   ├──────────────────────┤
   │[%SWL>106 1/4%        │
   │ %SWL>110%]           │
   └──────────────────────┘
          │
                          1219
   ┌──────────────────────┐
   │        RET           │
   └──────────────────────┘
```

$BM = wg.\cos\theta - wt.\sin\theta$

$LM = TM - BM$

$\delta \triangleq K.LM.L^2$

$S = \delta + UD$

$R = (L\cos\theta + s.\sin\theta) - d$

$HL = LM/r$

$SWL = (f)R\ or\ \theta$

$\%SWL = \dfrac{HL}{SWL} \times \dfrac{100}{1}$

$\%SWL > 106\ 1/4\%$
$\%SWL > 110\%$

$TM = F\sin\phi$

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | EP - A - 0 007 816 (S. GEPPERT) <br> * Page 1, lines 4-8; page 3, line 20 - page 4, line 7; page 5, section "Detailed description of the specific embodiment", line 1 - page 9, line 18; page 13, line 3 - page 21, line 20; figures 1-7 * <br><br> -- | 1,7-9, 12,13, 18 | G 01 G 19/18 <br> B 66 C 23/90 |
| | DE - A - 2 641 082 (FRIED. KRUPP GmbH) <br> * Page 3, line 1 - page 4, line 24; page 5, line 11 - page 7, line 16; figures * <br><br> -- | 1,7-9, 12,13, 18 | **TECHNICAL FIELDS SEARCHED (Int. Cl.³)** <br><br> G 01 G 19/14 <br> 19/18 <br> 19/20 <br> B 66 C 23/90 |
| | US - A - 3 638 211 (A.A.SANCHEZ) <br> * Abstract; column 2, line 1 - column 5, line 71; figures 1-3 * <br><br> -- | 1,7-9, 13,18 | |
| E | GB - A - 2 050 294 (W.R. THOMASSON) <br> * Page 1, lines 5-122; page 2, line 12 - page 3, line 7; figures 1-4 * <br> -- | 1,7-9, 13,18 | |
| A | FR - A - 2 320 894 (R. HORN et al.) <br> * Page 2, line 14 - page 3, line 27; page 8, lines 20-31; figures 1,2 * | 1,8,18 | **CATEGORY OF CITED DOCUMENTS** <br><br> X: particularly relevant <br> A: technological background <br> O: non-written disclosure <br> P: intermediate document <br> T: theory or principle underlying the invention |
| A | & US - A - 4 052 602 <br><br> -- | | E: conflicting application <br> D: document cited in the application <br> L: citation for other reasons |
| A | DE - A - 2 609 858 (W. GERDES) <br> * Page 8, line 26 - page 11, line 31; figures 1-7 * | 1,8,18 | |

.../.

The present search report has been drawn up for all claims

&: member of the same patent family, corresponding document

| Place of search | Date of completion of the search | Examiner |
|---|---|---|
| The Hague | 12-06-1981 | NENTWICH |

EPO Form 1503.1  06.78

0035809

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>US - A - 4 133 032</u> (A.M. SPURLING)<br>* Abstract; figures 1-7 * | 1 | |
| DA | & GB - A - 1 523 967 | | |
| | -- | | |
| A | <u>FR - A - 2 228 708</u> (PYE LTD.)<br>* Figures 1-4 * | 1 | |
| DA | & GB - A - 1 462 785 | | |
| DA | & GB - A - 1 463 811 | | |
| | -- | | **TECHNICAL FIELDS SEARCHED (Int. Cl.³)** |
| DA | <u>GB - A -1 360 128</u> (PYE LTD.)<br>* Figures 1-3 * | 1 | |
| | ---- | | |

EPO Form 1503.2   06.78